# EUROPÄISCHE PATENTSCHRIFT

(11) **EP 2 360 622 B1**
(45) Veröffentlichungstag und Bekanntmachung des Hinweises auf die Patenterteilung: **08.07.2015**
(21) Anmeldenummer: 11003044.2
(22) Anmeldetag: 12.08.2009
(51) Int. Cl.: G06K 13/08, H01R 13/64, G06K 7/00

(54) **Push-Push Kartenleser insbesondere für eine SIM-Karte**
Push-push card reader, in particular for a SIM card
Lecteur de carte push-push, notamment pour une carte SIM

(30) Priorität: 29.08.2008 DE 102008045030
(43) Veröffentlichungstag der Anmeldung: 24.08.2011
(62) Teilanmeldung aus: 09010411.8
(73) Patentinhaber: Amphenol-Tuchel Electronics GmbH, 74080 Heilbronn (DE)
(72) Erfinder: Rau, Michael, 74177 Bad Friedrichshall (DE); Schnell, Thomas, 74078 Heilbronn (DE)

(56) Entgegenhaltungen:
- DE-A1- 19 501 641
- DE-A1-102007 057 521

## Beschreibung

Die Erfindung bezieht sich auf einen Push-Push Kartenleser und zwar insbesondere auf einen Push-Push Kartenleser für eine SIM-Karte.

Es sind bereits zahlreiche Push-Push Kartenleser für SIM-Karten und für Chip-Karten allgemein bekannt. Das Dokument DE19501641 offenbart einen Push-Push-Kartenleser mit einer auf die An- oder Abwesenheit einer Chipkarte im Kartenschacht ansprechenden Schaltanordnung. Die vorliegende Erfindung hat sich die Aufgabe gestellt, einen außerordentlich kleinen Push-Push Kartenleser für SIM-Karten (im folgenden kurz: SIM-Push-Push-Leser, Kartenleser oder Leser) vorzusehen, der insbesondere eine geringe Dicke besitzt und in etwa den Umriss einer SIM-Karte aufweist. SIM-Karten haben im allgemeinen eine Größe von 25mm x 15mm und eine bestimmte Dicke. Die bekannte häufig in Handys verwendete SIM-Karte (im folgenden kurz: Karte) hat zwei Längskanten und zwei Querkanten, wobei eine schräg verlaufende Kante zwischen der einen Querkante und der einen Längskante vorgesehen ist. Dadurch ergibt sich die Möglichkeit die SIM-Karte auch falsch, beispielsweise spiegelverkehrt einzusetzen, was zu einer Zerstörung des Lesers oder zu einer Fehlfunktion führen kann. Nachdem der erfindungsgemäße SIM-Push-Push-Leser insbesondere bei Mobilfunkgeräten eingesetzt werden soll, würde bei einer falsch eingesetzten Karte kein Telefon-Funkbetrieb möglich sein. Es kann bei einem SIM-Push-Push-Leser gemäß dem Stand der Technik beim falschen Einschieben der SIM-Karte zu einer Zerstörung des Steuermechanismus oder Push-Push-Mechanismus kommen. Im Stand der Technik sind Steuermechanismus und Mittel zum korrekten Einführen der Karte voneinander entkoppelt angeordnet, so dass es keine gemeinsame technische Funktion und damit Absicherung gibt. Wird die fehlerhaft eingesetzte Karte zu weit eingeschoben, so kann sich ein Steuer-Pin ungewollt in einer Zwischenrastposition verhaken. Es kann ein Kartenverdrehschutz vorgesehen sein, der bei falsch eingesetzter Karte eine Zerstörung des Steuermechanismus und anderer Teile des Kartenlesers verhindert.

Der Kartenverdrehschutz weist vorzugsweise Karteneinschubblockiermittel auf.

Die Karteneinschubblockiermittel weisen deckelseitige Einschubblockiermittel (Schiebereinschubsperre) insbesondere in der Form einer Deckelfeder und schieberanordnungsseitige insbesondere schieberseitige Einschubblockiermittel insbesondere in der Form einer am Schieber ausgebildeten Steuerkurve auf.

Dabei sind die deckelseitigen Einschubblockiermittel an die Bewegung der Steuerkurve derart gekoppelt, dass vor dem Fehlarretieren des Steuer-Pins die Karteneinschubblockiermittel ansprechen und zwar dadurch, dass der Kartenschieber von den deckelseitigen Einschubblockiermitteln in der Bewegung gestoppt wird. Bei richtig eingesetzter SIM-Karte und korrekter Kartenführung wird der Kartenschieber unter den deckelseitigen Einschubblockiermitteln, speziell der Deckelfeder hindurchgeführt.

Zur Einbringung der verschiedenen Kontakte in den Kontaktträger mit exakter Positionierung derselben sowie auch zur Verstärkung des Kontaktträgers kann ein Umspritz- bzw. Kontaktgitter vorgesehen, welches vorzugsweise nicht nur die erforderlichen Kontakte, sondern auch Deckelhaltemittel bildet, und vorzugsweise in den Kontaktträger bildenden Kunststoff eingespritzt ist.

Nachdem der erfindungsgemäße SIM-Kartenleser nicht nur eine geringe Baugröße besitzen muss, sondern auch sicher betätigbar sein muss, stellt die Erfindung eine Vorrichtung gemäß Anspruch 1 bereit. Vorzugsweise kann ein zweifunktionales bzw. zweiteiliges Schaltsystem vorgesehen sein. Dieses zweifunktionale Schaltsystem weist einen Kartenanwesenheitsschalter (NC-Schalter) sowie einen Pre-Warning-Schalter auf. Der Kartenanwesenheitsschalter besitzt einen vorzugsweise vom Kontaktgitter gebildeten NC-Kontaktarm, der um seine spätere Funktion nicht durch den Lötvorgang des SIM-Kartenlesers auf die Leiterplatte zu beeinträchtigen erfindungsgemäß, während des Lötvorgangs sich in einer Arretierposition befindet und vorzugsweise auch noch im Auslieferzustand arretiert verbleibt. Beispielsweise bei einer Erstbedienung durch den Kunden (ggf. aber auch beim Hersteller) wird durch das ordnungsgemäße Einführen einer SIM-Karte der NC-Kontaktarm des Anwesenheitsschalters aus seiner Arretierposition in eine "normalerweise geschlossene" (normally closed, d. h. NC) Position übergeführt. Um die Baugröße des SIM-Kartenlesers und die Zahl der Komponenten klein zu halten, wird erfindungsgemäß die Arretierposition des Kontaktarms des Anwesenheitsschalters durch einen Kontaktendteil des Kontaktarms vorzugsweise des Befestigungsendes des Kontaktarms des Pre-Warning-Schalters bereitgestellt. Dieser Kontaktendteil verfügt insbesondere über eine Schräge, über die der NC-Kontaktarm des Anwesenheitsschalters von der Arretierposition mittels richtig eingesetzter Karte in die NC Position, d. h. die normalerweise geschlossene Position des Anwesenheitsschalters übergeführt werden kann. Das zweifunktionale Schaltsystem hat also zwei Grundfunktionen integriert, nämlich einen NC-Schalter zur Kartenanwesenheitsüberprüfung sowie einen Pre-Waming-Schalter, welcher der Elektronik frühzeitig anzeigt, dass die Karte entnommen wird.

Im Rahmen der Aufgabe der Erfindung, nämlich einen betriebssicheren, eine kleine Baugröße besitzenden Kartenleser vorzusehen, kann man für den Kartenverdrehschutz auf bereits vorhandene Komponenten des Lesers zurückgreifen.

So sind die deckelseitigen Einschubblockiermittel, (d. h. die Schiebereinschubsperre), als eine Deckelfeder (insbesondere als Druckfeder) als Teil eines Deckels des Lesers ausgebildet und Gegenblockiermittel sind an der Schieberanordnung insbesondere dem Schieber als schieberseitige Einschubblockiermittel insbesondere als eine vom Schieber gebildete Steuerkurve ausgebildet, die vorzugsweise ein Schieberblockierteil besitzt.

Um einen kostengünstigen, betriebssicheren SIM-Push-Push-Kartenleser kleiner Baugröße zu erreichen, sieht die Erfindung, die in der Beschreibung und den Ansprüchen genannten Maßnahmen vor.

Weitere Vorteile, Ziele und Einzelheiten der Erfindung ergeben sich aus der Beschreibung eines Ausführungsbeispiels anhand der Zeichnung; in der Zeichnung zeigt:
Fig. 1 eine perspektivische Draufsicht auf die Oberseite eines Ausführungsbeispiels eines SI M-Push-Push-Kartenlesers;
Fig. 2 eine perspektivische Draufsicht auf die Unterseite des SIM-Push-Push-Kartenlesers der Fig. 1;
Fig. 3 eine perspektivische Draufsicht auf die Seite eines Kontaktträgers des SIM-Push-Push-Kartenlesers der Fig. 1, wobei der in Fig. 1 vorhandene Deckel abgenommen ist;
Fig. 4 und Fig. 5 perspektivische Ansichten einer Einzelheit des SIM-Push-Push-Kartenlesers, wobei in Fig. 4 die Arretierposition und in Fig. 5 der aktivierte Zustand einer NC-Schaltfeder eines NC-Schalters dargestellt ist;
Fig. 6 und Fig. 7 schematische Draufsichten auf Einzelheiten des in Fig. 1 hinteren Bereichs des SIM-Push-Push-Kartenlesers, wobei insbesondere die Karteneinschubblockiermittel des Kartenverdrehschutzes gezeigt sind;
Fig. 8 eine Draufsicht auf ein Umspritz- bzw. Kontaktgitter; und
Fig. 9 eine Einzelheit der Fig. 2.

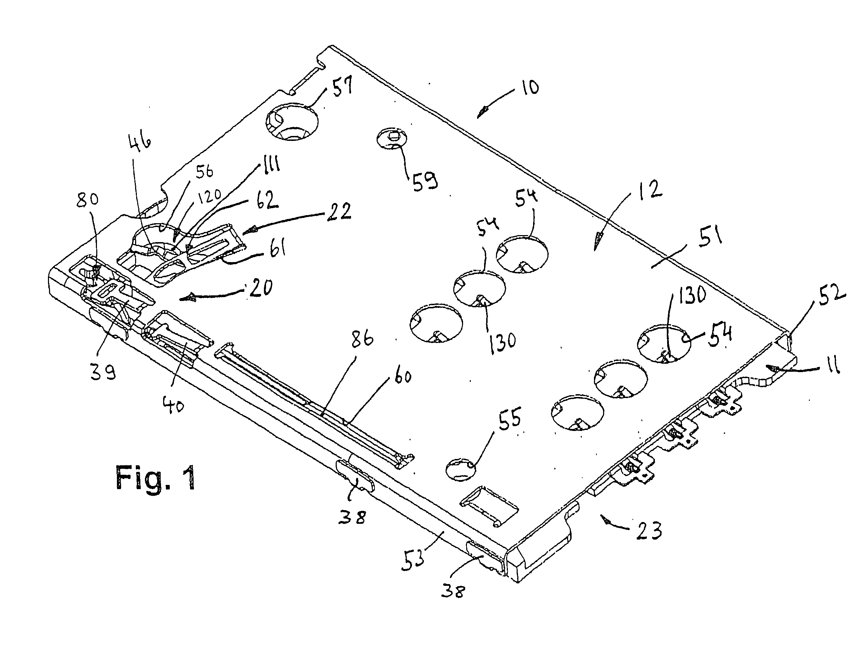

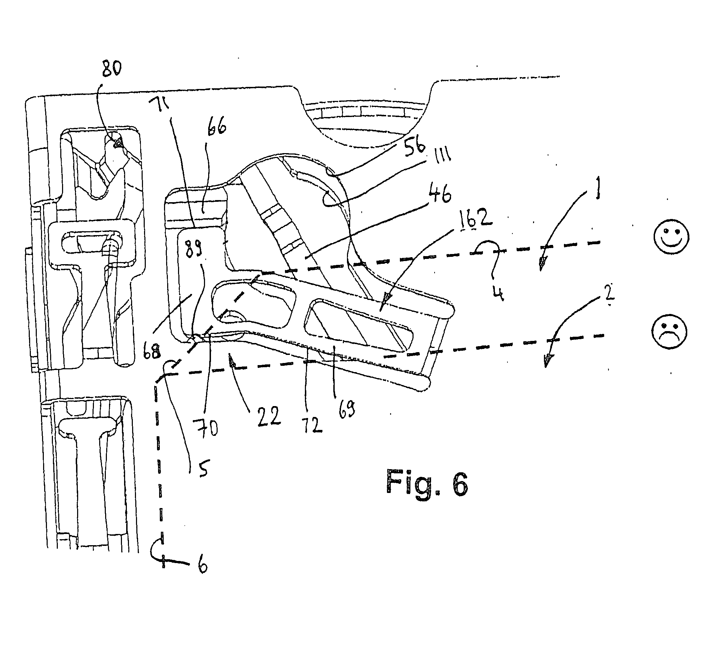

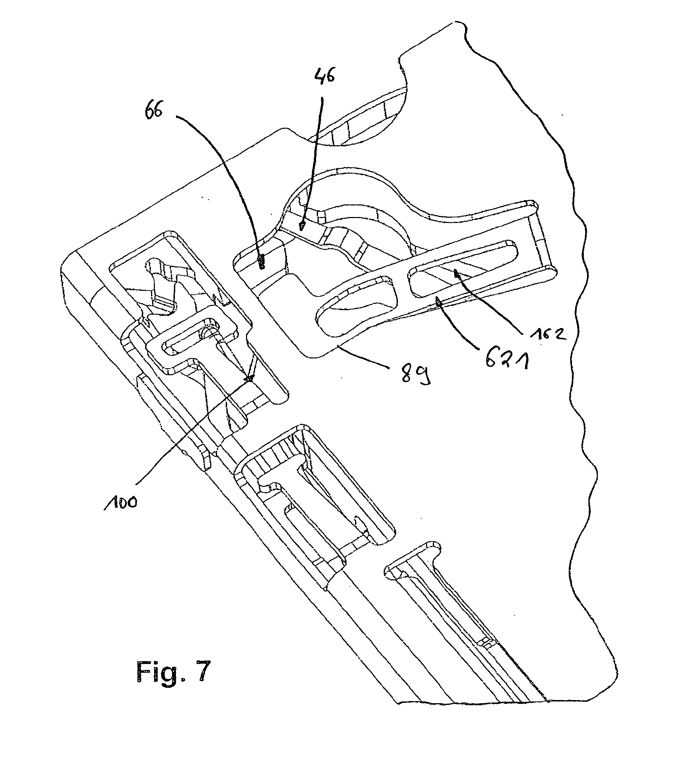

In den Fig. 1 bis 9 ist ein SIM-Push-Push-Kartenleser 10 (im folgenden kurz "Kartenleser oder Leser" genannt) gezeigt. Dieser Leser 10 ist insbesondere für SIM-Karten 1, 2 geeignet. Im folgenden wird auf eine SIM-Karte 1, 2 auch kurz als "Karte" Bezug genommen. Die Karte 1, 2 weist zwischen einer auch als Steuerkarte bezeichneten Vorderkante 4 und einer Seitenkante 6 eine Schräge 5, wie in Fig. 6 gezeigt, auf. Ferner ist in den Fig. 6 und 7 die richtig eingesetzte Karte mit 1 und die falsch eingesetzte Karte mit 2 bezeichnet.

Der Kartenleser 10 weist einen Kontaktträger 11 mit einem am Kontaktträger 11 befestigten Deckel 12 auf.

Der Leser 10 weist ferner einen Push-Push-Mechanismus 20 auf, der es erlaubt mit einem ersten "Push" die Karte 1 in ihre Leseposition im Leser 10 zu bringen und dort halten und mit einem weiteren "Push" die Karte 1 wieder aus dem Leser 10 "auszuwerfen".

Um eine Beschädigung des Lesers 10 durch falsches Einsetzten einer Karte 2 zu verhindern, ist ein Kartenverdrehschutz 22 vorgesehen.

Der Kartenleser 10 ist ferner mit sogenannten Lese- bzw. Datenkontakten 13 und vorzugsweise mit weiteren noch zu beschreibenden Kontakten bzw. Kontaktarmen (Kontaktfedern) ausgestattet.

Insbesondere weist der Leser 1 ein zweifunktionales Schaltsystem 16 auf, welches seinerseits einen Kartenanwesenheitsschalter oder NC-Schalter 14 und einen Pre-Warning-Schalter 15 besitzt.

Der Kartenleser 10 bildet, wie in Fig. 1 gezeigt, einen Karteneinführschlitz 23 zu dem zwischen Deckel 12 und Kontaktträger 11 gebildeten Kartenaufnahmeschacht 9.

### Der Kontaktträger 11

Der Kontaktträger 11 ist ein plattenförmiger Kunststoffkörper, in dem ein auch als Umspritzgitter (oder Stanzgitter) bezeichnetes Kontaktgitter 17 eingespritzt ist, was den extrem dünnen Kunststoffkörper stabilisiert. Dieser erfindungsgemäße Aufbau bringt trotz der kleinen Dickenabmessungen einen stabilen Aufbau.

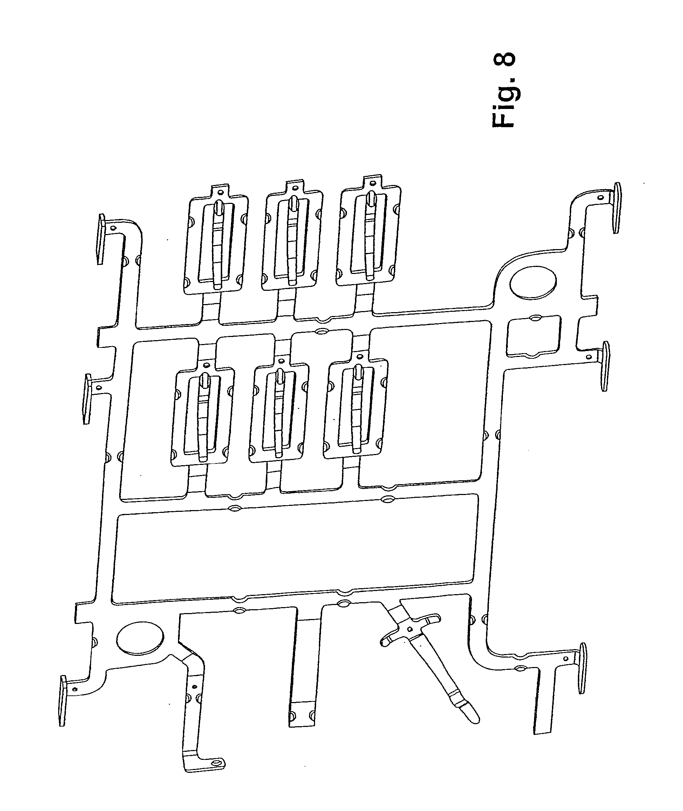

Das Kontaktgitter 17 (Fig. 8) dient als Träger und bildet vorzugsweise zahlreiche der erforderlichen Kontakte bzw. Kontaktfedern z. B. eine Kontaktfeder (Kontaktarm) 46 für den NC-Schalter 14 und die Datenkontakte (Lesekontakte) 13. Das Kontaktgitter 17 dient als Träger für die Kontaktfeder 46, erforderliche Kontakte und insbesondere die Datenkontakte 13. Nach dem Umspritzprozess werden an Trennstellen 281 erforderliche elektrische Trennungen der noch zu beschreibenden Leiterbahnen 170 vorgenommen.

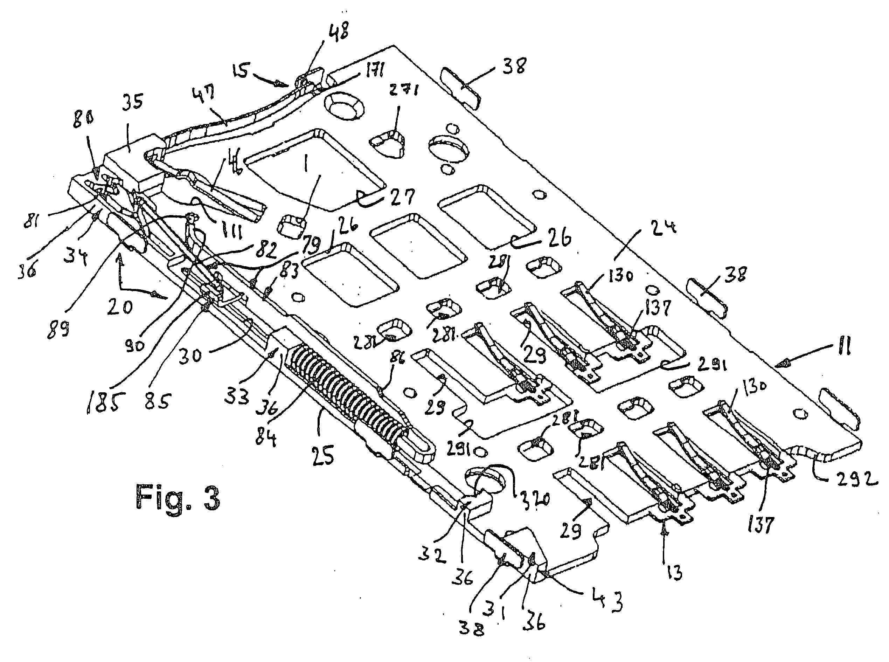

Der Kontaktträger 11 hat - vergleiche dazu Fig. 3 - eine Oberseite 24 und eine Unterseite 25. Ausschnitte 26, 27 durchdringen den Kontaktträger 11. Insbesondere sind Datenkontaktausschnitte 29 für die Datenkontakte 13 vorhanden, sodass sich deren Federarme 130 (Fig. 3) dahindurch erstrecken können.

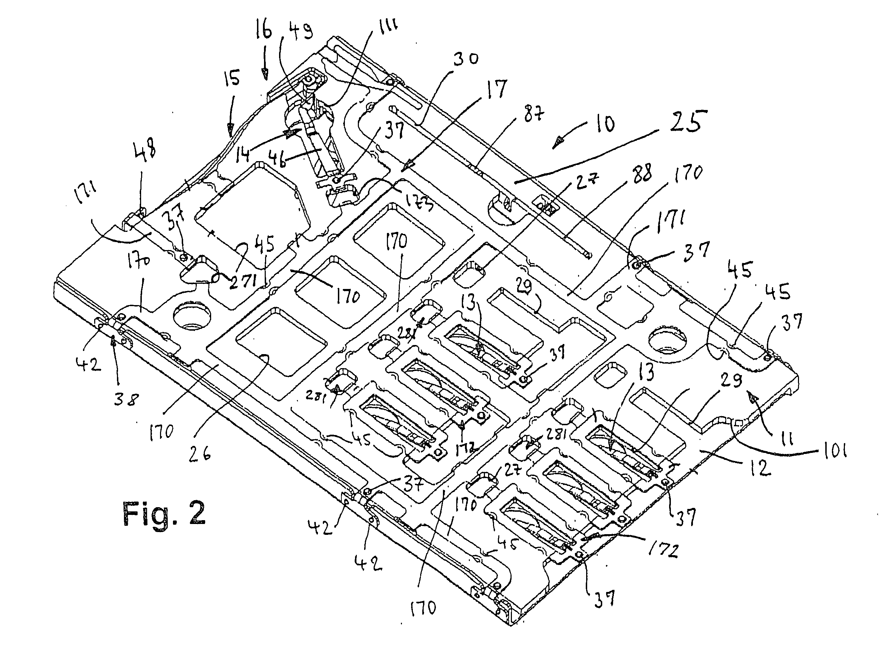

Entlang der in Fig. 3 linken Längskante 43 des Kontaktträgers 11 sind ein Führungsschlitz 30 und mehrere Körper 31 bis 35 beim Spritzen des Kontaktträgers 11 gebildet. Die Körper 31 bis 35 bilden auch Deckelhaltearmanlageflächen 36 für noch zu beschreibende Deckelhaltemittel vorzugsweise in der Form von Deckelhaltearmen 38. Das im Kontaktträger 11 enthaltene Kontaktgitter 17 weist, wie insbesondere wie in Fig. 2 und Fig. 8 gezeigt ist, Leitungsbahnen (Leiterbahnen, Kontaktstreifen, Pilotstreifen) 170 und noch zu beschreibende weitere Kontakte z. B. den NC-Kontaktarm (Kontaktfeder) 46 auf. Die Ausschnitte 271 können bestimmte Leiterbahnen 170 an den Trennstellen 281 durchtrennen. Ein Ausschnitt 271 - vergleiche Fig. 2 - bildet so ein Leiterbahnstück (Anschlussarm) 171 das z. B. zu einem Pre-Warning-Schalterkontakt 48 führt.

Die Datenkontakte 13 sind so ausgebildet, dass sie (vergleiche Fig. 2) mit Anschlussarmen 172 aus dem Kontaktträger 11 herausragen und an ihren freien Enden Lötkontakte bzw. Lötpunkte 37 bilden. Die Datenkontakte 13 besitzen einen rechteckigen Rahmen mit einem Federarm 130 in der Mitte, wobei dieser geringfügig über die Oberseite 24 des Kontaktträgers 11 ragt, jedenfalls dann, wenn der Kontaktträger 11 auf eine (nicht gezeigte) Platine mit seinen Lötpunkten 37 aufgelötet ist.

Der das Kontaktgitter 17 integriert enthaltende Kontaktträger 11 bildet durch das Kontaktgitter 17 die Deckelhaltearme 38, die somit aus dem Metall des Kontaktgitters 17 bestehen. Die Deckelhaltearme 38 werden (vergleiche Fig. 2) durch Schweißpunkte 42 mit Seitenwänden 52, 53 des vorzugsweise aus Metall bestehenden Deckels 11 verschweißt. Vorzugsweise sind die Deckelhaltearme 38 in etwa T-förmig und sind wie in Fig. 2 gezeigt mittels zweier beanstandeter Schweißpunkte 42 mit dem Deckel 12 verbunden und zwar benachbart zu jeweils einem Lötpunkt 37, der zum anlöten an die Platine dient. So ergibt sich eine kraftschlüssige Verbindung zwischen Kontakt- bzw. Stanzgitter 17 und Deckel 12 für einen sicheren Halt und auch eine elektrische Verbindung zwischen Kontakt- bzw. Stanzgitter 17 und Deckel 12 für optimale Schirmwirkung dank geringem Abstand zwischen Schweiß- und Lötpunkt.

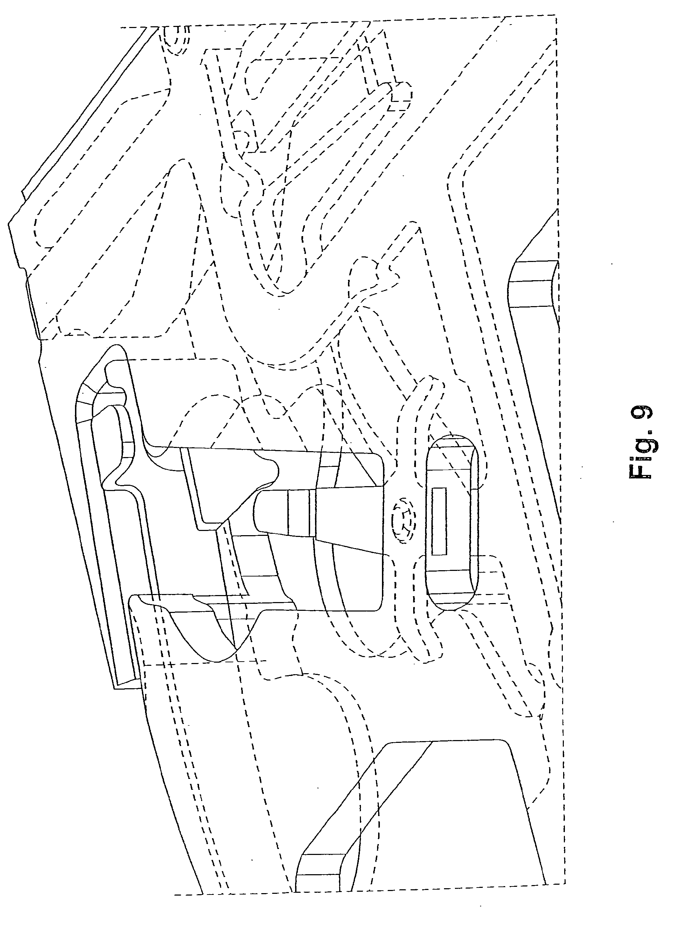

Das im Kontaktträger 11 eingespritzte Kontaktgitter 17 bildet wie erwähnt die NC-Kontaktfeder 46 des NC-Schalters 14 die im Bereich eines einer Ausschnitts 120 des Deckels 12 und einer Ausnehmung 111 des Kontaktträgers 11 angeordnet ist. Eine bewegliche Pre-Warning-Schaltfeder (Kontaktarm) 47 des Pre-Warning-Schalters 15 sowie der damit zusammenarbeitende im wesentlichen stationären Pre-Warning-Schaltkontakt 48 sind in Fig. 3 gezeigt. Die Schaltfeder 47 ist gesondert hergestellt und ist am Kontaktträger 11, wie in Fig. 9 gezeigt, befestigt. Durch die in ihrer Leseposition befindlichen Karte 1 wird der Pre-Warning-Schalter 15 geschlossen.

### Der Deckel 12

Der Deckel 12 weist eine rechteckige Metallplatte 51 auf, von der die zwei beabstandeten Seitenwände 52, 53 (vergleiche Fig. 1) nach unten ragen, sodass die Deckelhaltearme 38 außen an den Seitenwänden 52, 53 zur Anlage kommen und dort an den Schweißpunkten 42 am Kontaktträger 11 angeschweißt werden können.

Im Deckel 12 sind Prüfbohrungen 54 für die Datenkontakte 13 und Zentrierbohrungen 55, 59 für die Montage angeordnet. Ferner ist eine Prüfbohrung 56 für den NC-Schalter 14 im Deckel 12 ausgebildet. Auch ist im Deckel 12 eine Prüfbohrung 57 für den Pre-Warning-Schalter 15 vorhanden.

Im Deckel 12 ist ein Führungsschlitz 60 ausgerichtet mit dem Führungsschlitz 30 im Kontaktträger 11 vorgesehen.

Die rechteckige Platte 51 des Deckels 12 bildet benachbart zur Prüfbohrung 56 den Ausschnitt 120 in den von der Platte 51 gebildete deckelseitige Einschubblockiermittel 621 in der Form einer Deckelfeder 162 bzw. eines Deckelarms 162 hineinragen. Vorzugsweise ist der Deckelarm 162 mit seinem freien Ende leicht nach unten (vergleiche Fig. 1) federnd in den Aufnahmeschacht 9 hineingebogen. Der Deckelarm 162 wird weiter unten im Zusammenhang mit dem Kartenverdrehschutz 22 noch im Einzelnen beschrieben.

### Der Push-Push-Mechanismus 20

Der Push-Push-Mechanismus 20 weist, wie an sich bekannt, eine Herzkurvenanordnung 80 sowie eine einen Schieber 83 und einen Herzdraht 82 verwendende Schieberanordnung 79 auf. Die Schieberanordnung 79 d. h. speziell der Schieber 83 ist durch die SIM-Karte 1, 2 verschiebbar. Der Schieber 83 bildet ein Kupplungsteil bzw. einen Kupplungsarm 85 mit dem der Herzdraht 82 an einem Einhängepunkt schwenkbar verbunden ist. Der Kupplungsteil 85 hat einen Abstützpunkt 185 zur Abstützung an der Seitenwand des Deckels 12.

Im einzelnen ist der Herzdraht 82 mit seinem einen nach unten gebogenen Ende schwenkbar in dem Kupplungsteil 85 eingehängt und sitzt mit seinem anderen nach unten abgewinkelten Ende dem Steuerpin in der die Herzkurve 81 bildenden Nut, um diese beim Push-Push-Betrieb in bekannter Weise von einer Ausgangsposition ausgehend in eine der Leseposition der Karte 1 entsprechende Rastposition und aus der Rastposition in die Ausgangsposition zu durchlaufen.

Der Schieber 83 ist in dem im Kontaktträger 11 ausgebildeten Führungsschlitz 30 und auch in dem Führungsschlitz 60 des Deckels 12 beidseitig, d. h. oben und unten geführt. Dadurch wird eine doppelte Schieberführung ermöglicht. Ferner wird eine noch zu beschreibende Schraubendruckfeder 84 durch die doppelte Schieberführung exakt positioniert.

Der Schieber 83 besitzt ferner (Fig. 2) eine Führungsnase 87 und einen Führungsteil 88 die in den Führungsschlitz 60 eingreifen. Ferner besitzt der Schieber 83 einen in Fig. 8 nach oben ragenden Führungsvorsprung 86 der sich zu Führungszwecken in dem Führungsschlitz 60 im Deckel 12 erstreckt.

Der Schieber 83 weist an seinem freien in den Kartenschacht 9 hineinragenden Ende eine Abwinkelung 90 auf. Diese schieberseitige Abwinkelung 90 bildet auf der einen Seite eine Steuerkurve 100 die in einem Schieberblockierteil 89 in der Form einer etwas verjüngten Anschlagnase endet. Auf der anderen Seite bildet die Abwinkelung 90 eine Kartenanlagefläche 102.

An dem entgegengesetzt liegenden Ende des Schiebers 83 ist dieser umgebogen und wird durch die Schraubendruckfeder 84 in Richtung des Körpers 32 in eine Ruheposition vorgespannt. In der in der Fig. 3 gezeigten Stellung ist der Schieber 83 aus seiner Ruheposition, wo der Biegungsteil des Schiebers 83 durch die Feder 84 in eine Ausnehmung 320 in dem Körper 32 gedrückt wird, durch die nicht dargestellte Karte 1, 2 verschoben, nicht jedoch in die Leseposition der Karte 1, 2 sondern in eine in etwa von der richtig eingesetzten Karte 1 erreichten in Fig. 7 gezeigten Position.

### Kartenverdrehschutz 22

Der Kartenverdrehschutz 22, vergleiche Fig. 6 und Fig. 7, wird durch Karteneinschubblockiermittel 62 für eine falsche Karte 2 gebildet d. h. die Blockade des Einschiebens einer falschen Karte 2 wird als eine Anzeige dafür benutzt, dass eine falsche Karte 2 eingesetzt werden soll. Die Karteneinschubblockiermittel 62 weisen zum einen die bereits erwähnten deckelseitigen Einschubblockiermittel 621 und zum anderen schieberanordnungsseitige Blockiermittel auf. Letztere sind am Schieber 83 als schieberseitige Einschubblockiermittel 622 ausgebildet. Die deckelseitigen Einschubblockiermittel 621 sind vorzugsweise eine Scheibereinschubsperre in der Form der Deckelfeder 162, die einen Einschub der Karte 2 in die Kartenlesestellung verhindert, wenn die falsche Karte den Schieber 83 einschiebt. Die schieberseitigen Einschubblockiermittel 622 weisen, wie erwähnt, an der Steuerkurve 100 einen Schieberblockierteil 89 auf der mit der Deckelfeder 162 zusammenwirken kann (Fig. 6).

Insbesondere in den Fig. 6 und 7 erkennt man, dass eine falsch eingesetzte Karte 2, die keine Schräge 5 an der in Einsetzrichtung vorderen Kante aufweist nicht in den Kartenschacht 9 eingeschoben werden kann, da die Steuerkurve 100, d. h. der Schieberblockierteil 89 auf eine von der Deckelfeder 162 gebildete Kartenanschlagkante 70, vergleiche Fig. 6, auftrifft und den Einschub blockiert. Dagegen würde eine richtig eingesetzte Karte 1 mit ihrer Steuerkarte 4 auf eine Anhebkante 72 der Deckelfeder 62 auftreffen und die Deckelfeder 62 anheben um darunter hindurch zu gleiten.

Wenn der Schieberblockierteil 89 auf die Kartenanschlagkante 70 auftrifft wird ein weiteres Einschieben der Karte 2 sicher unmöglich gemacht weil eine der Kartenanschlagkante 70 gegenüberliegende Anstoßkante 71 der Deckelfeder 62 auf einen Anschlag 66 des Kontaktträgers 11 auftrifft. Beim Loslassen der Karte 2 drückt dann, ohne Erreichen der Leseposition, die Feder 84 die Karte 2 wieder aus dem Kartenschacht 9 heraus. Der Anschlag 66 bildet die deckelseitigen Einschubblockiermittel 621 verstärkende kontaktträgerseitige Einschubblockiermittel.

Die Kartenanschlagkante 70 und die Anstoßkante 71 werden von einem Querteil 68 des Längsarms 69 der Deckelfeder 162 gebildet.

### Zweifunktionales Schaltsystem 16

Das zweifunktionale Schaltsystem 16 weist, wie bereits erwähnt, einen Kartenanwesenheits- oder NC-Schalter 14 sowie einen Pre-Warning-Schalter 15 auf. Letzterer weist neben einem stationären Schaltkontakt 48 die durch die Karte 1 betätigbare bewegliche Pre-Warning-Schaltfeder 47 auf. Die Schaltfeder 47 ist an einen Ende am Kontaktträger 11 befestigt und bildet an der Befestigungsstelle einen Kontaktendteil 49.

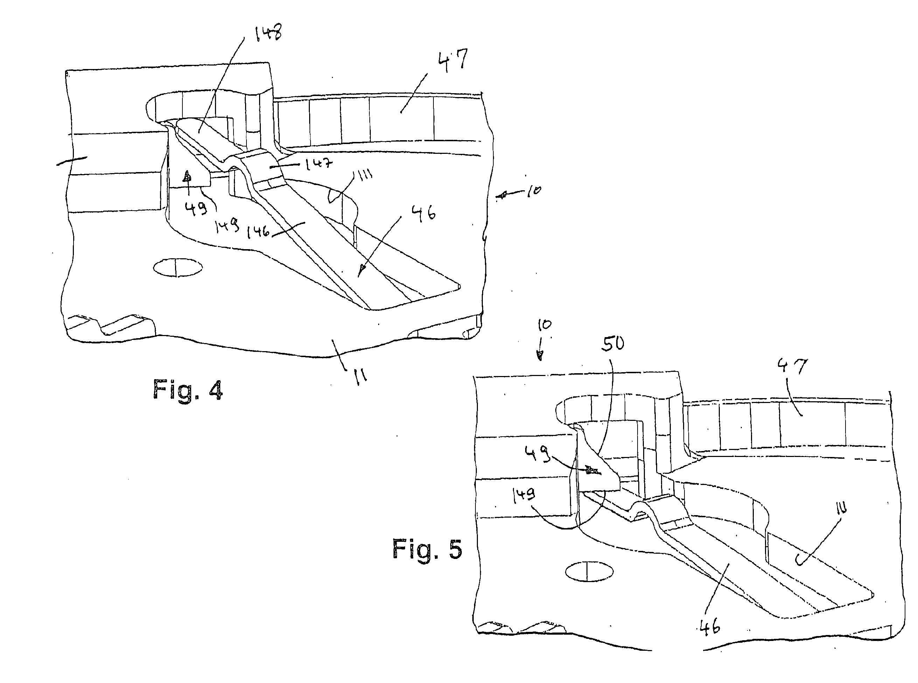

Der NC-Schalter 14 weist die NC-Schaltfeder 46 auf, die durch das Kontaktgitter 17 (in Fig. 2 schematisch gezeigt) gebildet ist. Ferner benutzt der NC-Schalter 14, neben der NC-Schaltfeder 46 den Kontaktendteil 49 der Pre-Warning-Schaltfeder 47. Der Kontaktendteil 49 bildet -wie in den Fig. 4 und 5 veranschaulicht- eine schräge Rampe 50 und eine Kontaktauflagefläche 149.

In Fig. 4 ist der Auslieferzustand des Push-Push-Kartenlesers 10 dargestellt. In dem Auslieferungszustand liegt die NC-Schaltfeder 46 kraftfrei, über dem Endteil 49 der Pre-Warning-Schaltfeder 47. Hierdurch wird sichergestellt, dass während des Lötprozesses, d. h. während des Anlötens des Push-Push-Kartenlesers 10 an einer nicht gezeigten gedruckten Schaltungsplatte kein Kraftverlust für die NC-Schaltfeder 46 auftrifft.

Nach dem Lötprozess wird die NC-Schaltfeder 46 und damit der NC-Schalter 14 in seinen in Fig. 5 gezeigten aktivierten Zustand gebracht. Diese erstmalige Aktivierung der NC-Schaltfeder 46 erfolgt im allgemeinen dann, wenn ein Benutzer zum ersten Mal eine SIM-Karte 1 in den Push-Push-Kartenleser 10 gemäß der Erfindung einsetzt. Beim seitenrichtigen Einsetzten einer SIM-Karte wird die NC-Schaltfeder 46 durch Auflaufen der Karte 1 auf eine Schräge 146 und eine Kuppe 147 der Schaltfeder 146 nach unten (Fig. 4) gedrückt, wobei ein Gleit- und Kontaktende 148 über die schräge Rampe 50 nach unten geführt wird und hinter die Pre-Warning-Schaltfeder 47 schnappt und zur Anlage an der Kontaktauflagefläche 149 des Kontaktendteils 49 kommt. Die NC-Schaltfeder 46 liegt in der Fig. 5 gezeigten Stellung vorzugsweise federnd an der Kontaktauflagefläche 149 an. In der in Fig. 5 gezeigten Stellung ist der Anwesenheitsschalter der im gezeigten Ausführungsbeispiel vorzugsweise als NC-Schalter 14 ausgebildet ist, d. h. "normally closed" (normalerweise geschlossen) und zwar durch seine Berührung mit dem Kontaktendteil 49 der Pre-Warning-Schaltfeder 47.

Der stationäre Kontakt 48 des Pre-Warning-Schalters 14 wird durch das Kontakt- bzw. Umspritzgitter 17 gebildet wie man in Fig. 2 erkennt. Ferner erkennt man in Fig. 2, dass am Ende einer Leiterbahn 170 ein Lötpunkt 37 vorgesehen ist. Allgemein sind Lötpunkte mit 37 bezeichnet.

Die mit ihrem Endteil 49 am Kontaktträger 11 in nicht näher gezeigter Weise befestigte Pre-Warning-Schaltfeder 47, die entgegen der Karteneinschubrichtung im nicht betätigten Zustand in den Kartenschacht 9 hinein gewölbt ist, ist im gezeigten Ausführungsbeispiel nicht durch das Kontaktgitter 17 gebildet.

Abschließend sei das falsche und richtige Einsetzen einer Karte 1, 2 zusammenfasst.

Beim Einsetzen einer verdrehten Karte 2, d. h. einer Karte 2 bei der - vergleiche Fig. 1 - das linke vordere Ende keine Schräge in Einsteckrichtung besitzt, kommt diese nichtsdestoweniger an der Abwinkelung 90 d. h. der Anlagefläche 102 (Fig. 3) zur Anlage und verschiebt den Schieber 83 entgegen der Kraft der Feder 84 in den Kartenschacht 9 hinein. Nachdem die Deckelfeder 162, wie in Fig. 6 gezeigt, nach unten abgewinkelt ist, trifft beim Einschieben der Karte 2 der Schieberblockierteil 89 des Kartenschiebers 83 auf die Kartenanschlagkante 70 auf, was das weitere Einschieben des Schiebers 89 und damit der falsch eingesetzten Karte 2 unmöglich macht.

Beim Einführen einer richtig positionierten Karte 1 in den Kartenschacht 9 trifft die Steuer- oder Vorderkante 4 der Karte 1 auf die vorzugsweise schräg zur Karteneinsteckrichtung und leicht in den Kartenschacht 9 hineingeneigte Anhebkante 72 der Deckelfeder 162 und hebt diese an. Die richtig eingesetzte Karte 1 läuft dann auch mit ihrem abgeschrägten Ende unter die Deckelfeder 162 und hebt diese hoch so dass eine Weiterbewegung der Karte 1 und des Schiebers 83 möglich ist wobei die Deckelfeder 62 vorzugsweise eine gewisse Druckkraft auf die Oberseite der Karte 1 ausübt. Bevor der Herzdraht 82 in die der Kartenleseposition entsprechende der Rastposition gelangt, wird die NC-Schaltfeder 46 nach unten gedrückt, so dass sich die Kontaktberührung mit der Auflagefläche 149 öffnet. Bei der weiteren Bewegung in die End- oder Leseposition der Karte drückt die Kartenvorderkante 4 schließlich die bewegliche Pre-Warning-Schaltfeder 47 gegen den zugehörigen Kontakt 48. Benachbart zum Kontakteinführschlitz 23 besitzt der Kontaktträger 11 eine Ausnehmung 101 in welche Anschlussarme 172 ragen. Mit 45 sind Verankerungsstellen bezeichnet.

## Patentansprüche

1. Push-Push-Kartenleser (10), insbesondere für eine SIM-Karte (1, 2), mit einem Datenkontakte (13) tragenden Kontaktträger (11) und einem unter Bildung eines Kartenschachts (9) am Kartenkontaktträger (11) befestigten Deckels (12), einer im Push-Push-Kartenleser angeordneten Push-Push-Mechanik (20) und einem Kartenanwesenheitsschalter (14) zur Detektion der Anwesenheit einer Karte (1, 2), wobei der Kartenanwesenheitsschalter (14) über eine NC-Schaltfeder (46) verfügt, **dadurch gekennzeichnet, dass** sich der Kartenanwesenheitsschalter (14) in einer Arretierposition oder in einem aktivierten Zustand befinden kann, wobei mittels Betätigung mit einer Karte (1, 2) der Kartenanwesenheitsschalter (14) von seiner Arretierposition in seinen aktivierten Zustand gebracht werden kann, bei dem sich der Kartenanwesenheitsschalter (14) bestimmungsgemäß bei Abwesenheit einer Karte (12) in seiner normalerweise geschlossenen Stellung befindet und bei Anwesenheit einer Karte in ihrer Lesestellung sich in einer geöffneten Stellung befindet und wobei die Schaltfeder (46) so ausgebildet ist, dass durch Auflaufen der Karte (1) auf eine Schräge (146) und eine Kuppe (147) der Schaltfeder (46) die Schaltfeder (46) über eine im Kartenleser (10) vorhandene schräge Rampe (50) mit seinem Gleit- und Kontaktende (148) in den aktivierten Zustand geführt wird.

2. Push-Push-Kartenleser (10) gemäß Anspruch 1, **dadurch gekennzeichnet, dass** sich der Kartenanwesenheitsschalter (14) in seiner Arretierposition in einer kräftefreien Stellung befindet.

3. Push-Push-Kartenleser (10) gemäß Anspruch 1 oder 2, **dadurch gekennzeichnet, dass** der Kartenanwesenheitsschalter (14) durch das erstmalige Einsetzen einer SIM-Karte (1, 2) in den Kartenleser (10) von seiner Arretierposition in seinen aktivierten Zustand gebracht wird.

4. Push-Push-Kartenleser (10) gemäß Anspruch 3, **dadurch gekennzeichnet, dass** bei nicht oder teilweise eingesetzter Karte (1, 2) die Schaltfeder (46) mit ihrem Gleit- und Kontaktende (148) an einer Kontaktauflagefläche (149) anlegt.

5. Push-Push-Kartenleser (10) gemäß Anspruch 4, **dadurch gekennzeichnet, dass** die Rampe (50) von einem Pre-Warning-Schalter (14) bereitgestellt wird

6. Push-Push-Kartenleser (10) gemäß Anspruch 4 oder 5, **dadurch gekennzeichnet, dass** der Pre-Warning-Schalter (14) auch die Kontaktauflagefläche (149) bereitstellt.

7. Push-Push-Kartenleser (10) gemäß Anspruch 5 oder 6, **dadurch gekennzeichnet, dass** der Pre-Warning-Schalter (15) ein Kontaktendteil (49) aufweist und den Kartenanwesenheitsschalter (14) mit seiner NC-Schaltfeder (46) in seiner Arretierposition kräftefrei über dem Kontaktunterteil (49) liegt.

## Claims

1. Push-push card reader (10), in particular for a SIM card (1, 2), having a contact carrier (11), which carries data contacts (13) and a cover (12) which is fastened to the card contact carrier (11) so as to form a card shaft (9), a push-push mechanism (20) which is arranged in the push-push card reader, and a card-presence switch (14) for detecting the presence of a card (1, 2), wherein the card-presence switch (14) has a NC-switch spring (46), **characterized in that** the card-presence switch (14) can be in a locked condition or in an activated state, wherein the card-presence switch (14) can be moved from its locked condition to its activated state by means of operation by a card (1, 2), in which activated state the card-presence switch (14) is in its normally closed position as intended when a card (12) is not present, and is in an open position in its read position when a card is present, and wherein the switch spring (46) is designed such that, as a result of the card (1) striking a slope (146) and a dome (147) of the switch spring (46), the switch spring (46) is moved to the activated state by means of a sloping ramp (50), which is present in the card reader (10), by way of its sliding and contact end (148).

2. Push-push card reader (10) according to Claim 1, **characterized in that** the card-presence switch (14) is in a force-free position in its locked condition.

3. Push-push card reader (10) according to Claim 1 or 2, **characterized in that** the card-presence switch (14) is moved from its locked condition to its activated state as a result of a SIM card (1, 2) being inserted into the card reader (10) for the first time.

4. Push-push card reader (10) according to Claim 3, **characterized in that**, when a card (1, 2) is not inserted or is partially inserted, the switch spring (46) bears against a contact support area (149) by way of its sliding and contact end (148).

5. Push-push card reader (10) according to Claim 4, **characterized in that** the ramp (50) is provided by a pre-warning switch (14).

6. Push-push card reader (10) according to Claim 4 or 5, **characterized in that** the pre-warning switch (14) also provides the contact support area (149).

7. Push-push card reader (10) according to Claim 5 or 6, **characterized in that** the pre-warning switch (15) has a contact end part (49), and the card-presence switch (14) lies above the contact lower part (49) in a force-free manner by way of its normally closed switch spring (46) in its locked condition.

## Revendications

1. Lecteur (10) de carte dit "push-push", en particulier pour carte SIM (1, 2), présentant un porte-contacts (11) portant des contacts de données (13) et un couvercle (12) fixé sur le porte-contacts (11) de carte et formant un puits (9) de carte, un mécanisme push-push (20) disposé dans le lecteur de carte push-push et un commutateur (14) de présence de carte qui détecte la présence d'une carte (1, 2), le commutateur (14) de présence de carte disposant d'un ressort de commutation NC (46), **caractérisé en ce que** le commutateur (14) de présence de carte peut se trouver dans une position de blocage ou dans une position activée, **en ce que** par activation à l'aide d'une carte (1, 2), le commutateur (14) de présence de carte peut être amené de sa position de blocage à sa position active, **en ce qu'**en cas d'absence d'une carte (12), le commutateur (14) de présence de carte se trouve normalement dans sa position normalement fermée et **en ce qu'**en présence d'une carte en position de lecture, il se trouve en position ouverte, **en ce que** le ressort de commutation (46) est configuré de telle sorte que par passage de la carte (1) sur une pente (146) et une coupelle (147) du ressort de commutation (46), le ressort de commutation (46) est amené dans sa position activée par l'intermédiaire d'une pente (50) prévue dans le lecteur (10) de carte, avec son extrémité de coulissement et de contact (148) dans la position activée.

2. Lecteur (10) de carte push-push selon la revendication 1, **caractérisé en ce que** lorsque le commutateur (14) de présence de carte est en position de blocage, il se trouve en position exempte de force.

3. Lecteur (10) de carte push-push selon les revendications 1 ou 2, **caractérisé en ce que** le commutateur (14) de présence de carte est amené de sa position de blocage à sa position activée lors de la première insertion d'une carte SIM (1, 2) dans le lecteur (10) de carte.

4. Lecteur (10) de carte push-push selon la revendication 3, **caractérisé en ce que** lorsqu'une carte (1, 2) n'est pas insérée ou n'est insérée que partiellement, le ressort de commutation (46) repose sur une surface (149) d'appui de contact par son extrémité (148) de coulissement et de contact.

5. Lecteur (10) de carte push-push selon la revendication 4, **caractérisé en ce que** la pente (50) est formée par un commutateur (14) de pré-avertissement.

6. Lecteur (10) de carte push-push selon les revendications 4 ou 5, **caractérisé en ce que** le commutateur (14) de pré-avertissement constitue aussi la surface (149) d'appui de contact.

7. Lecteur (10) de carte push-push selon les revendications 5 ou 6, **caractérisé en ce que** le commutateur (15) de pré-avertissement présente une partie (49) d'extrémité de contact et **en ce que** le commutateur (14) de présence de carte repose par son ressort de commutation NC (46) en position de blocage sans force au-dessus de la partie inférieure de contact (49).
